# EUROPÄISCHE PATENTSCHRIFT

(11) **EP 2 229 344 B1**
(45) Veröffentlichungstag und Bekanntmachung des Hinweises auf die Patenterteilung: **27.08.2014**
(21) Anmeldenummer: 08857149.2
(22) Anmeldetag: 08.12.2008
(51) Int. Cl.: C01G 1/00, C01G 1/02, C01G 1/10, C01G 23/00, C01G 23/053, C01B 25/45

(54) **VERFAHREN ZUR HERSTELLUNG VON LITHIUMEISENPHOSPHAT ODER GEMISCHTEN LITHIUMEISENÜBERGANGSMETALLPHOSPHATEN**
METHOD FOR THE PRODUCTION OF LITHIUM IRON PHOSPHATE OR MIXED LITHUM IRON TRANSITION METAL PHOSPHATES
PROCÉDÉ DE PRÉPARATION DE LITHIUM FER PHOSPHATE OU DES MÉLANGE DE LITHIUM FER MÉTAL TRANSITOIRE PHOSPHATE

(30) Priorität: 06.12.2007 DE 102007058674
(43) Veröffentlichungstag der Anmeldung: 22.09.2010
(73) Patentinhaber: Süd-Chemie IP GmbH & Co. KG, 80333 München (DE)
(72) Erfinder: HOLZAPFEL. Michael, 76532 Baden-Baden (DE); LAUMANN, Andreas, 80689 München (DE); BAUER, Peter, 84172 Buch am Erlbach (DE); VOGLER, Christian, 85368 Moosburg (DE); LIANG, Guoxian, St-Hyacinthe Québec J2R 2C4 (CA)
(74) Vertreter: Stolmár & Partner
(86) Internationale Anmeldenummer: PCT/EP2008/010399
(87) Internationale Veröffentlichungsnummer: WO 2009/071332

(56) Entgegenhaltungen:
- EP-A- 0 260 664
- EP-A- 1 630 136
- WO-A-02/27824
- WO-A-2005/051840
- WO-A-2006/105848
- WO-A-2007/000251
- CN-A- 1 526 645
- ZHAO TIE LIU ,SHUSHAN YAO, PING SUN, LIPING SONG, JIAN LU, HEPING XIONG, YUANDE PENG, SHOUWEI TANG: "Preparation and characterization of highly dispersed nanocrystalline rutile powders" MATERIALS LETTERS, Bd. 61, Nr. 13, 2007, Seiten 2798-2803, XP002535788
- DATABASE CA [Online] CHEMICAL ABSTRACTS SERVICE, COLUMBUS, OHIO, US; SU, YUE-FENG ET AL: "Preparation of Li4Ti5O12 from nanocrystalline TiO2 and its lithiation performance" XP002535791 gefunden im STN Database accession no. 141:108801 & WULI HUAXUE XUEBAO , 20(7), 707-711 CODEN: WHXUEU; ISSN: 1000-6818, 2004,
- JIANG, CHUNHAI; ICHIHARA, MASAKI; HONMA, ITARU; ZHOU, HAOSHEN: "Effect of particle dispersion on high rate performance of nano-sized Li4Ti5O12 anode" ELECTROCHIMICA ACTA, Bd. 52, Nr. 23, 2007, Seiten 6470-6475, XP002535789
- DONGYEON SON, EUNJIN KIM, TAE-GON KIM: "Nanoparticle iron-phosphate anode material for Li-ion battery" APPL. PHYS. LETT., Bd. 85, 2004, Seiten 5875-5877, XP002535790
- DATABASE CA [Online] CHEMICAL ABSTRACTS SERVICE, COLUMBUS, OHIO, US; ZHANG, JIN-LING ET AL: "Study on synthesis of Fe3(PO4)2 by solid state reaction and its influencing factors" XP002535837 gefunden im STN Database accession no. 147:192805 & DIANCHI GONGYE , 11(5), 318-321 CODEN: DGIOAN; ISSN: 1008-7923, 2006,

## Beschreibung

Die vorliegende Erfindung betrifft eine Verfahren zur Herstellung von nanopartikulärem. Lithiumeisenphosphat, oder gemischtem Lithium eisenubergangsmetallphosphat.

Nanopartikel, d.h. als Pulver erzeugte oder in flüssigen Medien dispers befindliche Feststoffe, deren Einzelpartikel in mindestens zwei Dimensionen eine Ausdehnung von typischerweise unter 1000 nm haben und die aus chemischen Elementen, anorganischen oder organischen Verbindungen oder Kompositen bestehen, finden seit einigen Jahren eine Vielzahl von Anwendungen.

Beispielsweise finden Nanopartikel Verwendung als Katalysatorausgangsstoffe, da Nanopartikel oft eine hohe BET-Oberfläche aufweisen.

Typischerweise wird bei der so genannten nasschemischen Synthese von nanokristallinen Pulvern bzw. von Nanopartikeln ausgehend von so genannten Precursor-Verbindungen (Vorläuferverbindungen) durch chemische Reaktionen ein Pulver synthetisiert, beispielsweise mittels Fällungen oder durch Hydrolyse metallorganischer Verbindungen. Die endgültige Struktur der Nanopartikel wird üblicherweise erst nach bzw. während einer nachfolgenden Kalzination nach dem Fällen erhalten.

Die gezielte Steuerung des Kristallisationsprozesses kann durch die Zusammensetzung des/der Edukte beeinflusst werden. Ein wichtiger Faktor ist hierbei - insbesondere beim Einsatz in der Katalyse derartiger Nanopartikel - die Kristallitgröße. (R. Schlögel et al., Angewandte Chemie 116, 1628-1637, 2004). Jedoch war es mittels nasschemischer Herstellungsverfahren, insbesondere mittels der so genannten basischen Hydroxidfällung bisher nahezu unmöglich, den Fällungsprozess im Hinblick auf die gewünschten Nanopartikel und deren Eigenschaften, insbesondere deren mittlere Partikelgrößenverteilung entsprechend zu optimieren.

Daher wurden auch mechanische Herstellungsverfahren für die Synthese von Nanopartikeln in Betracht gezogen. Dies erfolgt beispielsweise durch intensives Mahlen inhomogener Partikel zu homogenen Partikeln, was jedoch oftmals auch zu unerwünschten Phasentransformationen, bis hin zu amorphen Partikeln aufgrund des auf die Partikel ausgeübten Druckes führt.

Die dabei gebildeten Partikel liegen jedoch nicht in einer gleichmäßigen homogenen Größenverteilung vor, weil die gebildeten sehr kleinen Partikel eine starke Tendenz zur Reagglomeration zeigen.

Ein weiterer Zugang zu Nanopartikeln führt über thermophysikalische Methoden, wie sie beispielsweise in der WO 2004/005184 offenbart sind. Diese beruhen typischerweise auf der Einbringung thermischer Energie zu festen, flüssigen oder gasförmigen Ausgangsverbindungen. Hierbei findet das so genannte plasmapyrolytische Sprayverfahren (PSP) der vorgenannten WO 2004/005184 besonders weite Verwendung, bei dem die Ausgangsstoffe in einer Knallgasflamme versprüht und dabei zersetzt werden. Eine typische Anwendung für das PSP Verfahren findet sich bei der Herstellung von nanokristallinem Siliziumdioxid, bei dem leicht flüchtige Organosiliziumverbindungen in einer Knallgasflamme versprüht werden.

Weiter wird oftmals bei der Synthese von Nanopartikeln das so genannte Plasmasyntheseverfahren eingesetzt, bei dem die Ausgangsstoffe in einem bis zu 6.000 K heißen Plasma verdampft werden. Weitere aus dem Stand der Technik bekannte Verfahren sind beispielsweise CVD Verfahren, bei dem gasförmige Edukte zur Reaktion gebracht werden, wobei dabei typischerweise auch nicht-oxidische Pulver bzw. gemischte oxidische Verbindungen mit verschiedenen Phasenstrukturen entstehen.

Nanopartikuläre Zusammensetzungen finden beispielsweise auch weite Anwendung bei der Herstellung von Elektrodenmaterialien für Sekundärbatterien wie sie beispielsweise in der EP 1 553 647 A1 beschrieben sind. In dieser Patentanmeldung wird insbesondere die Herstellung von Lithiumeisenphosphat beschrieben, wobei das Material meist Aggregate mit einer Größe von > 1 µm bildet. Insbesondere für die Anwendung als Kathodenmaterial sind auch möglichst feinteilige Partikel erwünscht.

Ähnliche Probleme ergeben sich bei der in der US 2002/0192137 offenbarten Herstellung von nanoskaligen und submikron Partikeln in einem Flussreaktor mittels Laserbestrahlung, wobei auch komplexe Oxide wie beispielsweise Lithiumphosphoroxidnitrid, Lithiumeisenmanganphosphat, Kalziumphosphat, Aluminiumphosphat etc. entstehen. Verwendung finden diese Nanopartikel gemäß der US 2002/0192137 ebenfalls als Material für Batterieanwendungen. Eine Herstellung von insbesondere Lithiumeisenphosphaten auf wässrigem Wege um Nanopartikel zu erhalten, wird in der WO 2006/116251 offenbart, wobei jedoch im Falle von Lithiumeisenphosphat von einer Fällung mittels Hydroxid abgeraten wird und die so genannte Carbonatfällung für die Ausgangsmaterialien empfohlen wird.

Die Herstellung von Lithiumeisenphosphat (LiFePO₄) ist insbesondere aus dem US 5,910,382 von Goodenough et al. bekannt. Dieses Material ist derzeit das erfolgsversprechendste Material für den Einsatz in Sekundarlithiumionenbatterien. Des Weiteren beschreiben die WO 02/27823 und WO 02/27824, die Herstellung von LiFePO₄ ausgehend von Eisenphosphat durch Umsetzung mit Lithiumcarbonat in Gegenwart einer Kohlenmonoxidatmosphare.

Die WO 2005/051840 und WO 2006/105848 A2 betreffen kristalline Ionen-leitende Nanomaterialien, wie beispielsweise Lithium-Metall-Phosphate sowie Verfahren zu deren Herstellung und auch deren Verwendun in einer Sekundärbatterie. Insbesondere Lithiumeisenphosphat wird durch ein Hydrothermalverfahren aus Eisenphosphat einer Phosphor-Verbindung und einer Lithium-Verbindung hergestellt.

Die EP 0 260 664 A2 beschreibt ein Verfahren zur Herstellung von Titandioxid in der Form von sphärischen Teilchen mit einer bestimmten Teilchengrößenverteilung in der Gegenwart von kationischen Polyelektrolyten mit einem Molekulargewicht von mehr als einer Million und einer Ionenstarke von wenigstens drei Milliäguivalenten pro Gramm.

Die CN 1526645 A betrifft ein Herstellungsverfahren von nanopartikularen Titaniumdioxid-Partikeln, bei dem Titantetrachlorid oder Tetrabutyltitanat in Ethanol gelöst wird, um eine Titan-haltige Ethanol-Lösung herzustellen, weiterhin PVA, Poly-glykol oder Polyacrylsäure mit einem Molekulargewicht von 200 bis 30.000 in deionisiertem Wasser gelost wird, die hydrolisierte Lösung in die Titan-haltige Ethanol-Lösung getropft und anschließend diese Losung in ein organisches Lösungsmittel mit einem Emulgator unter Rühren getropft wird, und anschließend unter Ultraschall zu einer Emulsion und einem Niederschlag dispergiert wird sowie weiterhin anschließend eine Zentrifugaltrennung, Waschen mit deionisiertem Wasser und Gefriertrocknen durchgeführt wird.

Zhao-Tie Liu et al. beschreiben in "Preparation and characterization of highly dispersed nanocrystalline rutile powders", in Mat. Lett. 2007, 61 (13), 2798 bis 2803 ein fein verteiltes nanokristallines Rutilpulver mit einem ultrafeinen und eng verteilten Durchmesser, das über ein verbessertes flüssiges Eintropf-Verfahren unter Verwendung von Dioctylsulfosuccinatnatriumsalz als Tensid hergestellt wurde.

EP 1 630 136 A1 beschreibt feine Oberflachen-modifizierte Titandioxid-Partikel, die Titandioxid mit einer Oberfläche umfassen, die mit einem hydrophilen Polymer modifiziert wurde, wobei das hydrophile Polymer Carboxyl-Gruppen enthält, die an das Titandioxid über eine Ester-Bindung gebunden sind. Ebenso wird darin eine Dispersion enthaltend das Oberflächenmodifizierte Titandioxid beschrieben. Diese Anmeldung betrifft auch ein Verfahren zur Herstellung des Oberflachenmodifizierten Titandioxids.

Die WO 2007/000251 A1 betrifft Lithiumionen-Akkumulatoren und positive Elektrodenmaterialien, die in der Lage sind, bei Potentialen von größer 2,8 Volt gegen Li⁺/Li in nicht wassrigen elektrochemischen Zellen zu operieren. Im Wesentlichen betrifft diese Anmeldung nanokristallines Kohlenstoff-freies Lithiumeisenphosphat des Olivin-Typs mit gesteigerten elektrochemischen Eigenschaften.

Die WO 02/27824 A1 betrifft ein Verfahren zur Herstellung eines Materials, das Partikel mit einem Kern und einer Beschichtung enthält, wobei beides miteinander uber eine Kohlenstoff-Vernetzung verknüpft ist und der Kern dieser Partikel wenigstens eine Verbindung der Formel LixM_{1-y}M'_{y}(XO₄)ₙ enthält, wobei x, y und n die Bedeutungen aufweisen: 0 ≤ x ≤ 2, 0 ≤ y ≤ 0, 6 und 1 ≤ n ≤ 1, 5, M ist ein Übergangsmetall, M' ist ein Element einer bestimmten Wertigkeit.

Su, Yue Feng., et al. beschreiben in Chemical Abstracts, 2004, 20(7), 707-711 verschiedene Lithiumtitan-Kompositoxide, die aus verschiedenen Titanoxiden hergestellt werden sowie deren elektrochemische Performance.

Jiang, Chunhai et al. beschreiben in "Effect of particle dispersion on high rate performance of nano-sized Li4Ti5O12 anode", in Electrochimica Acta (2007), 52 (23), 6470 bis 6475 die Herstellung von nanopartikulärem Lithiumtitanat-Pulver durch ein Sol-Gel-Verfahren unter Verwendung von P123 als Tensid.

Dongyeon Son et al. beschreiben in "Nanoparticle ironphosphite anode material for Li-ion battery", in Appl. Phys. Lett. 85, 5875-5877 (2004) ein Verfahren zur Herstellung von nanopartikularem kristallinen Eisenphosphat unter Verwendung eines Tensids zur Herstellung eines Anodenmaterials für wie-deraufladbare Li-Akkumulatoren.

Zhang, Jin-ling et al. beschreiben in Abstract (2006), 11(5) (318-321) die Herstellung von Fe₃(PO₄)₂ durch eine Festphasenreaktion.

Eine Aufgabe der vorliegenden Erfindung bestand daher darin, ein neues Verfahren zur Herstellung von nanopartikularem Lithiumeisenphosphat oder gemischtem Lithiumeisenübergangsmegsme-tallphosphat zur Verfugung zu stellen.

Der Begriff "nanopartikulär" bezeichnet üblicherweise Teilchen ("Partikel") mit einer mittleren Teilchengröße von ≤500 nm, meistens wird für Nanopartikel ein Größenbereich von 1-100 nm angegeben (s. z.B. Paschen, H., Coenen, C., Fleischer, T., Grünwald, R., Oertel, D., Revermann, C.; Nanotechnologie-Forschung, Entwicklung, Anwendung; Springer-Verlag; Berlin, Heidelberg, New York 2004).

Erfindungsgemäß wird dieses Problem durch ein Herstellungsver-fahren gelöst, bei dem eine nanopartikuläre Zusammensetzung eingesetzt wird, die voneinander isolierte, nicht aggregierte Nanopartikel aus FePO₄·2H₂O mit einer Partikelgrößenverteilung von d₉₀ ≤ 10 µm, ganz besonders bevorzugt von d₉₀ ≤ 5 µm enthält.

Der Begriff "nicht aggregiert" bedeutet erfindungsgemäß, dass keine Partikel, die aus mehreren einzelnen Partikeln bestehen, d.h. die so genannte Agglomerate ("Sekundärpartikel") bilden und eine Teilchengröße von mehr als 15 µm aufweisen, in der nanopartikulären Zusammensetzung vorliegen. Anders ausgedrückt besteht die erfindungsgemäße Zusammensetzung daher nur aus sogenannten Primärpartikeln.

Bevorzugt ist die Partikelgrößenverteilung der erfindungsgemäßen Zusammensetzung monomodal und ganz besonders bevorzugt beträgt der d₅₀ Wert der erfindungsgemäßen Nanopartikel 0,2 bis 1 µm. Es wurde überraschenderweise gefunden, dass fast ausschließlich fein-kristalline Nanopartikel in der nanopartikulären Zusammensetzung enthalten sind und keine amorphen Partikel vorliegen.

Eisen(III)phosphat ist schon des Längeren bekannt. Beispielsweise ist ein Herstellungsverfahren in der GB 962 182 beschrieben. Allerdings weist das Eisen(III)phosphat des Standes der Technik (FePO₄·2H₂O) bestenfalls eine mittlere Partikelgröße d₅₀ von ca. 10 bis 20 µm auf. Kleinere Partikelgrößen waren bislang aufgrund der Herstellungsverfahren und der hohen Verunreinigungen mit Sulfaten nur schwer oder gar nicht zugänglich.

Die Größenverteilung der erfindungsgemäß eingesetzten Nanopartikel ist in ganz besonders bevorzugten speziellen Ausführungsformen monomodal. Insbesondere weisen die FePO₄ Partikel eine ganz besonders bevorzugte mittlere Partikelgrößenverteilung d₅₀ von 0.3 bis 0.8 µm noch bevorzugter von 0, 4 bis 0,7 µm auf, was weit unter den Partikelgrößenverteilungen d₅₀ aller bislang bekannten Eisen (III) phosphate des Standes der Technik liegt.

Im Gegensatz zu den bisher zumeist verwendeten sulfathaltigen Eisen(III)phosphaten, was aufgrund der Verwendung von Eisensulfat als Ausgangsmaterial geradezu zwangsläufig hervorgerufen wird, ist die erfindungsgemäße partikelförmige Zusammensetzung enthaltend FePO₄·2H₂O nahezu sulfatfrei. "Nahezu" bedeutet vorliegend, dass mit zur Zeit üblichen Analysemethoden kein Sulfat im Rahmen der Messgenauigkeit nachgewiesen werden kann.

Ein weiterer wichtiger Gesichtspunkt der vorliegenden erfindungsgemäß eingesetzten FePO₄·2H₂O enthaltenden Zusammensetzung besteht darin, dass, wie vorstehend ausgeführt, die Partikel dieser Zusammensetzung fein kristallin sind und nicht in amorphem Zustand vorliegen bzw. überhaupt keine amorphen Partikel aufweisen, wie es typischerweise bei den meisten anderen nanopartikulären FePO₄ Verbindungen des Standes der Technik auftritt.

In einer vorteilhaften Weiterbildung der vorliegenden Erfindung enthält die erfindungsgemäß eingesetzten Zusammensetzung außerdem noch ein oberflächenaktives Mittel.

Überraschenderweise wurde gefunden, dass das Vorhandensein des oberflächenaktiven Mittels dazu führt, dass die einzelnen Nanopartikel in der Zusammensetzung nach dem abschließenden Trocknen voneinander getrennt, d h. isoliert bleiben, wodurch die erfindungsgemäß eingesetzten Zusammensetzung daher als besonders feinpartikuläres Pulver verwendet werden kann, das nicht aggregiert und agglomeriert, auch nicht unter typischen Agglomerationsbedingungen wie erhöhte Umgebungsfeuchtigkeit etc. Dies betrifft insbesondere Nanopartikel auf der Basis von Metall- bzw. Übergangsmetallphosphaten, -oxiden, -carbonaten und -sulfaten.

In bevorzugter Weise hat das oberflächenaktive Mittel einen ionischen Charakter, wobei je nach chemischer Struktur und Eigenschaft der Nanopartikel der ionische Charakter des oberflächenaktiven Mittels von kationisch bis anionisch variieren kann.

Es wurde weiter gefunden, dass das oberflächenaktive Mittel in einer Menge von 0,01 bis 2 Gew.-% bezogen auf das Gesamtgewicht der Zusammensetzung vorhanden sein kann. Bei weniger als 0,01 Gew.-% ist nicht mehr gewährleistet, dass die Nanopartikel voneinander getrennt bleiben und nicht aggregieren bzw. agglomerieren. Bei mehr als 2 Gew.-% entstehen durch die zunehmende Menge an oberflächenaktiven Mitteln ebenfalls Agglomerate. Bevorzugt sollte allerdings nicht mehr als 1 Gew.-% vorhanden sein, da ansonsten die Filtration erschwert wird.

Bevorzugt weist das oberflächenaktive Mittel, einen schwach kationischen Charakter auf, wie sie beispielsweise die oberflächenaktiven Mittel der Praestol Flockungsmittelserie der Fa. Stockhausen GmbH & Co. aufweisen.

Es hat sich als vorteilhaft herausgestellt, dass das oberflächenaktive Mittel mit schwach kationischem Charakter in einer Menge von 0,01 bis 1 Gew.-% bezogen auf das Gewicht der gesamten Zusammensetzung enthalten ist, wobei dann fein verteilte Kristallite des FePO₄·2H₂O vorliegen. Bei mehr als 1 Gew.-% des oberflächenaktiven Mittels ist eine einfache Filtration des Produktes im nachstehend beschriebenen erfindungsgemäßen Verfahren nicht mehr möglich und es werden fast nur verklebte Agglomerate erhalten.

Beispielsweise bei der Herstellung von TiO₂ durch Hydrolyse von Ti(IV) Verbindungen war es auch schon bekannt, kationische Polyelektrolyte beizugeben (EP 260 664 A2) jedoch waren dabei Mengen von mehr als 4, noch bevorzugter von mehr als 5,5 Gew.-% bezogen auf das Gewicht der gesamten Zusammensetzung erforderlich. Die erfindungsgemäß verwendeten geringen Mengen an oberflächenaktiven Mittel sind präzedenzlos.

Bei der Herstellung der erfindungsgemäß eingesetzten nanopartikulären Zusammenset-zung können die Nanopartikel in Losung gefällt und nach der Fällung der Nanopartikel kann ein oberflachenaktives Mittel zugegeben werden.

Das Verfahren zur Herstellung einer erfindungsgemäß eingesetzten nanopartikulären Zusammensetzung enthaltend Fe-PO₄·2H₂O umfasst die Schritte des
a) Bereitstellens einer sauren wassrigen Losung einer Fe-Ausgangsverbindung, wobei die Konzentration (in Vol.-%) der sauren Lösung der Fe-Ausgangsverbindung 10 bis 50 % beträgt;
b₁) ggf. Zugebens einer Alkalimetallhydroxid-Losung;
b₂) Zugebens einer Saure mit einem geeigneten Anion;
c) Zugebens eines oberflächenaktiven Mittels, das einen kationischen Charakter aufweist, nach Beginn der Fallung des Niederschlags; und
d) Filtrierens des Niederschlags.

Unter "Alkalimetallhydroxid" werden erfindungsgemäß KOH oder NaOH Losungen verstanden.

Der Begriff "geeignetes Anion" bedeutet, dass das Anion mit der Übergangsmetallausgangsverbindung einen im verwendeten Lösungsmittel unlöslichen Niederschlag bildet.

Schritt b₁) ist optional.

Mindestens einer, bevorzugt der erste Schritt a) (die anderen Schritte erfolgen dann bei Raumtemperatur), bevorzugter alle Schritte a) bis c) der Verfahrensschritte werden bei einer Temperatur im Bereich von 60 - 170 °C, bevorzugt 60 - 150 °C, am meisten bevorzugt 60 - 110 °C, durchgeführt.

Die Zugabe des oberflächenaktiven Mittels in Schritt c) erfolgt typischerweise nach Beginn der Fällung des Niederschlags, ganz bevorzugt nach Beendigung der Fällung und führt zu einer deutlich erkennbaren Flockung des Niederschlags, der vor der Zugabe die Form einer extrem feinteiligen Suspension hatte. Durch die Flockung ist eine leichte Filtration über handelsübliche Filtermedien möglich, ohne dass z. B. Zentrifugen etc. eingesetzt werden müssen.

Im Anschluss an die Filtration kann die nanopartikuläre Zusammensetzung noch bei Temperaturen von ≤ 250 °C getrocknet werden.

Es wurde überraschenderweise gefunden, dass durch die Verfahrensführung zur Herstellung der erfindungsgemäß eingesetzten nanopartikulären Zusammensetzung, insbesondere des Zugebens eines oberflächenaktiven Mittels nach Beginn der Ausfällung, feinkristalline, isolierte nicht agglomerierte Nanopartikel mit Partikeldurchmessern von 0.3 bis 0.8 µm, ganz besonders von 0,4 bis 0,7 µm erhalten werden, was aufgrund der vorliegend verwendeten Hydroxidfällungsroute nicht zu erwarten war. Der Begriff "nach Beginn der Ausfällung" umfasst erfindungsgemäß auch den Zeitpunkt, dass die Zugabe, wie vorstehend schon erläutert, nach Beendigung des Ausfällungsvorgangs erfolgt.

Bei FePO₄·2H₂O war z. B. bekannt (P. Reale und B. Scrosati Chem. Mater. 5051 2003) dass Eisenphosphat ausgehend von FeCl₃ mit H₃PO₄ bei einer Ausgangskonzentration von 0,009 mol/l FeCl₃. H₂O und 0,0027 mol/l H₃PO₄ erhalten werden kann, wobei drei strukturell verschiedene Phasen mit der chemischen Formel FePO₉·2H₂O entstehen, nämlich Strengit, Metastrengit I und Metastrengit II, die bei unterschiedlichen pH-Werten ausfallen.

Nach dieser Literaturstelle entsteht Strengit bei Zugabe von 0,04 molarer NaOH (pH = 3-4), Metastrengit I ohne zusätzliche Zugabe (pH = 1-2) und Metastrengit II bei Zugabe von 0,5 molarer HCl (pH = 0-1). Die Reaktionszeiten zum Erlangen der reinen Phasen nehmen von Strengit mit zwei Tagen über Metastrengit I mit 7 Tagen bis zum Metastrengit II mit 12 Tagen zu. Weiter beschreiben die Autoren auch Mischphasen unter stark sauren Bedingungen (pH = 0-1) und einer geringeren Reaktionszeit als 12 Tage. Die Phase Strengit kommt als auch natürliches Mineral mit selbem Namen vor, Metastrengit II kann mit dem natürlich vorkommenden Mineral Phosphosiderit gleichgesetzt werden. Metastrengit I ist weder als natürliche, noch als synthetische Phase beschrieben.

Probleme ergeben sich insbesondere durch die schwere Filtrierbarkeit des Produktes ebenso wie durch die verschiedenen Phasen die im Stand der Technik beschrieben wurden.

Im Gegensatz zu den vorstehend erwähnten Ergebnissen von Reale und Scrosati wurde beim dem erfindungsgemäß einsetzbaren Verfahren zur Herstellung der nanopartikulären Zusammensetzung überraschenderweise nicht beobachtet, dass zuerst Strengit-FePO₄ und nach längerer Reaktionszeit Metastrengit I und Metastrengit II Phasen entstehen.

Typischerweise entsteht bei dem erfindungsgemäßen Verfahren sofort die Metastrengit I Phase.

Das erfindungsgemäß einsetzbare Verfahren zur Herstellung von FePO₉·2H₂O ausgehend von Eisen(III)-chlorid, NaOH bzw. KOH und Phosphorsäure weist in einer bevorzugten Ausführungsform, in der die FeCl₃ Lösung, vorzugsweise ebenfalls die NaOH bzw. KOH Lösung, auf eine Temperatur von 60 bis 170 °C, bevorzugter 60 bis 150 °C, am meisten bevorzugt 60 - 110 °C erhitzt wird und die FeCl₃ Lösung eine Konzentration von 30 bis 50% aufweist, eine hohe Ausbeute von mehr als 90% auf, wobei ein extrem feinteiliges kristallines Material aus Primärpartikeln ohne Agglomerate (Sekundärpartikel) bzw. Aggregate entsteht.

Der Nachteil bei der Verwendung von Eisen-(III)-Chlorid ist, dass das Edukt stark chloridhaltig ist, da Chloride stark korrosiv wirken, sowohl bei der Herstellung als auch in späteren Verwendungen. Bei der Herstellung können typischerweise keine herkömmlichen Metallbehälter verwendet werden, so dass beispielsweise zumindest der Innenraum säurefest ausgekleidet sein muss. Weiter war man bislang der Auffassung, dass das erhaltene Material stark gewaschen werden muss, um eine geringe Chloridkonzentration des Produkts zu erhalten.

Im Stand der Technik wurde bislang von der Verwendung von Natronlauge bzw. Kalilauge als Fällungsmittel bei der Synthese von Übergangsmetallverbindungen abgeraten, da nicht filtrierbare Produkte entstehen und ab gewissen Konzentrationen von Natron- bzw. Kalilauge das erhaltene Rohprodukt stark agglomeriert ist.

Das erfindungsgemäß eingesetzte nanokristalline Eisen(III)phosphat wird insbesondere dann mit der angegebenen Partikelgrößenverteilung erhalten, wenn in der Reaktionslösung durch Zugabe der Natron- bzw. Kalilauge zur Eisen(III)chloridlösung in der Wärme intermediär Eisen(III)hydroxid gefällt wird, welches dann mit Phosphorsäure weiter zu Eisen(III)phosphat reagiert. Ohne intermediäres Ausfällen von Eisen(III)hydroxid entstehen zu wenige Kondensationskeime, wodurch größere Partikel entstehen.

Bevorzugt wird NaOH bzw. KOH-Lösung in einer Konzentration von ca. 2 mol pro mol Fe verwendet, was zu besseren Ergebnissen bei der intermediären Ausfällung von Eisenhydroxid führt.

Die Aufgabe der vorliegenden Erfindung wird gelöst mit einem Verfahren zur Herstellung von nanopartikulärem LiFePO₄ oder gemischtem Lithiumeisenübergansmetallphoshat umfassend das Umsetzen
a) einer nach dem oben stehendem Verfahren zur Herstellung einer nanopartikulären Zusammensetzung enthaltend nicht-agglomerierte kristalline Nanopartikel aus FePO₄·2H₂O mit einer Partikelgrößenverteilung d₉₀ ≤ 10 µm mit
b) einer stöchiometrischen Menge einer Lithiumverbindung ausgewählt aus LiOH, Li₂O, Lithiumacetat, Lithiumoxalat oder Li₂CO₃
unter pyrolytischen Bedingungen, d.h. in einer Festkörperreaktion, wobei in bevorzugten Weiterbildungen weiter eine Übergangsmetallverbindung, wobei das Übergangsmetall M ausgewählt wird aus Co, Ti, Ni, V, W, Pd, Ru, Cu, Mn, Ba, Sr, Nd, Mg zugegeben wird. Typische Verbindungen sind dabei deren Phosphate, Carbonate, Oxalate, Nitrate, Acetate, Hydroxide, Carboxylate oder Oxide. Damit können die entsprechenden dotierten Lithiumeisenphosphate LiFe₁₋ₓMₓPO₄ mit x < 1 erhalten werden, wobei M auch eine Mischung aus mehreren der vorgenannten Übergangsmetalle sein kann, wie es z.B. in den EP 1,325,525 A1, EP 904 607 B1, US2003/0082454 beschrieben ist, auf deren Offenbarungsgehalt hier vollumfänglich Bezug genommen wird.

Es wurde überraschenderweise gefunden, dass die nanopartikulären Eigenschaften der erfindungsgemäß eingesetzten Zusammensetzung enthaltend z.B. FePO₄·2H₂O auch nach dem Kalzinieren der Zusammensetzung in dem mittels dieser kalzinierten Produkte in dem erfindungsgemäßen Verfahren hergestellten LiFePO₄ sowie in deren dotierten Derivaten beibehalten werden, so dass sich die Zugabe eines oberflächenaktiven Mittels schon bei der Ausgangsverbindung positiv auf das Agglomerationsverhalten auch bei der Synthese von z. B. LiFePO₄ bzw. deren dotierten Derivaten auswirkt. D.h. es wird extrem feinteiliges nanopartikuläres, kristallines reines oder dotiertes LiFePO₄ ausgehend von mit einem oberflächenaktiven Mittel erfindungsgemäß gefällten FePO₄ erhalten.

Erfindungsgemäß sind also extrem feinteilige Materialien erhältlich, die auch nach weiterer Umsetzung ihre Feinteiligkeit beibehalten bzw. diese dem durch die weitere Umsetzung erhaltenen Produkt transferieren.

In bevorzugten Ausführungsformen erfolgt die Synthese in Gegenwart einer zusätzlichen Kohlenstoffquelle, wie sie z. B. in der EP 1 049 182 A1 beschrieben ist, auf deren Offenbarungsgehalt hier vollumfänglich Bezug genommen wird.

In ganz besonders bevorzugten Ausführungsformen wird als Kohlenstoffquelle das oberflächenaktive Mittel verwendet, das in einer bevorzugten erfindungsgemäß eingesetzten Zusammensetzung (die nicht kalziniert wurde) schon enthalten ist, so dass vorteilhaft auf die Zugabe einer weiteren Kohlenstoffquelle verzichtet werden kann. Dadurch wird ein weiterer Zugang zu kohlenstoffbeschichteten Nanopartikeln, beispielsweise LiFePO₄ bzw. deren dotierten Derivaten bereitgestellt.

Die Erfindung ist nachstehend anhand von Zeichnungen und Ausführungsbeispielen näher erläutert, ohne dass diese als einschränkend verstanden werden sollen.

Es zeigen
- Fig. 1: eine SEM Aufnahme von LiFePO₄ das mit der erfindungsgemäß eingesetzten Zusammensetzung enthaltend Eisenphosphat erhalten wurde;
- Fig. 2: eine SEM Aufnahme von LiFePO₄, das gemäß dem Stand der Technik aus FePO₄ ohne Zugabe eines oberflächenaktiven Mittels erhalten wurde;
- Fig. 3: eine SEM Aufnahme von LiFePO₄, das ausgehend von FePO₄ ·2H₂O erhalten wurde;
- Fig. 4: in einem Diagramm die Belastbarkeit und Kapazität von LiFePO₄ erhältlich aus verschiedenen Ausgangsmaterialien;
- Fig. 5: in einem Diagramm den Spannungsverlauf beim Be- und Entladen der ersten 35 Zyklen von LiFePO₄ mit erfindungsgemäß einsetzbarem FePO₄·2H₂O als Vorläufer;
- Fig. 6: eine SEM Aufnahme einer erfindungsgemäß einsetzbaren Zusammensetzung, die nanopartikuläres FePO₄·2H₂O enthält;
- Fig. 7: eine SEM Aufnahme von FePO₄·2H₂O ohne Zugabe eines oberflächenaktiven Mittels.

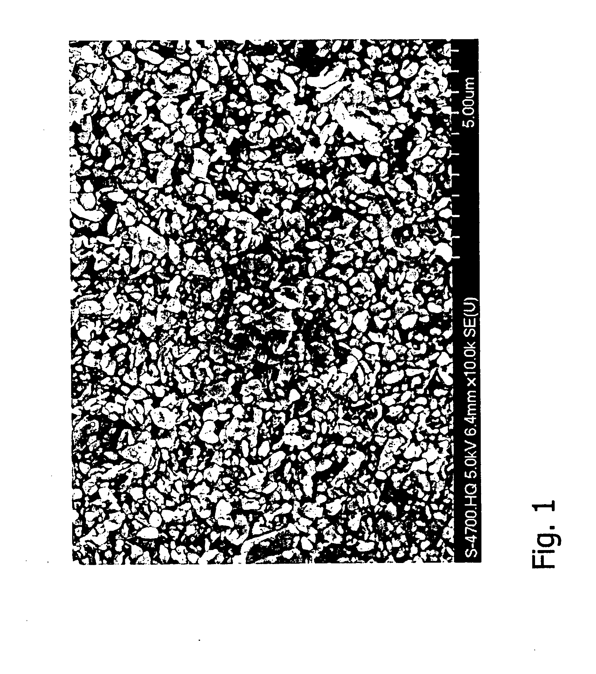

Fig. 1 zeigt eine SEM Aufnahme von LiFePO₄ (Probennummer ALEP 46_3) das aus erfindungsgemäß einsetzbarem nanopartikulären FePO₄ analog zu dem in der CA 2320661 beschriebenen Verfahren gemäß untenstehendem Beispiel 2 hergestellt wurde und zeigt deutlich feinkristalline diskrete Partikel wie auch der Ausgangsstoff FePO₄·2H₂O. Die Feinkristallinität von FePO₄ wurde also auf LiFePO₄ "transferiert".

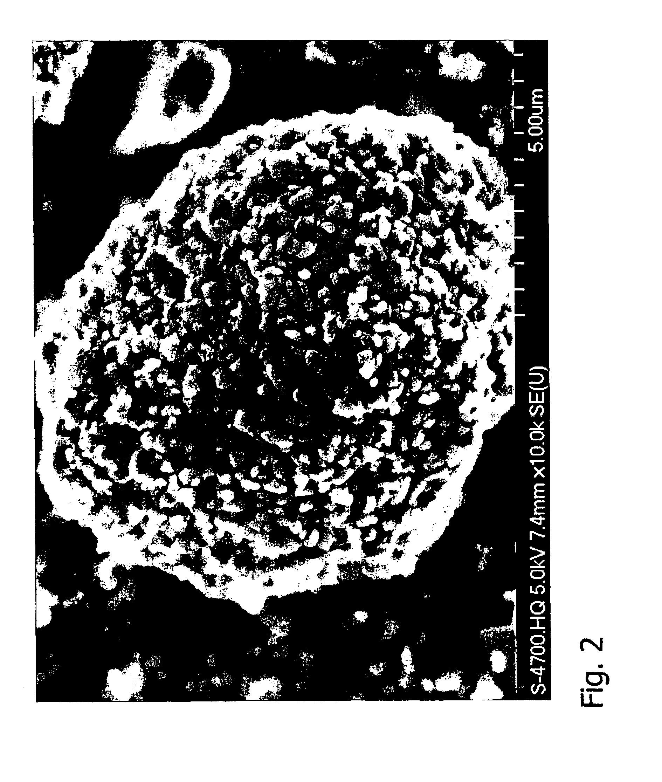

Fig. 2 zeigt LiFePO₄ (Probe ALEP 46_1) das ausgehend von Fe-PO₄·2H₂O wie in Fig. 1 erhalten wurde, bei dem bei der Herstellung kein oberflächenaktives Mittel zugegeben wurde und zeigt deutlich eine Agglomeration der Partikel (im Gegensatz zu den feinkristallinen, diskreten Partikeln in Fig. 1) zu größeren Aggregaten.

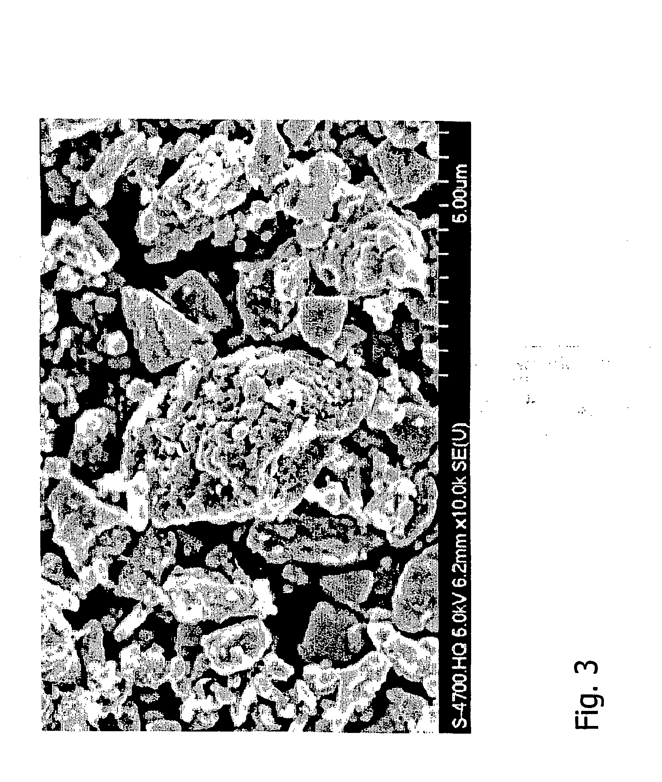

Fig. 3 zeigt ein nach der gleichen Methode hergestelltes LiFe-PO₄ aus kommerziell erhältlichem FePO₄·2H₂O (Firma Budenheim), das verglichen mit Fig. 1 und Fig. 2 insbesondere deutlich größere, gröbere Einzelpartikel aufweist.

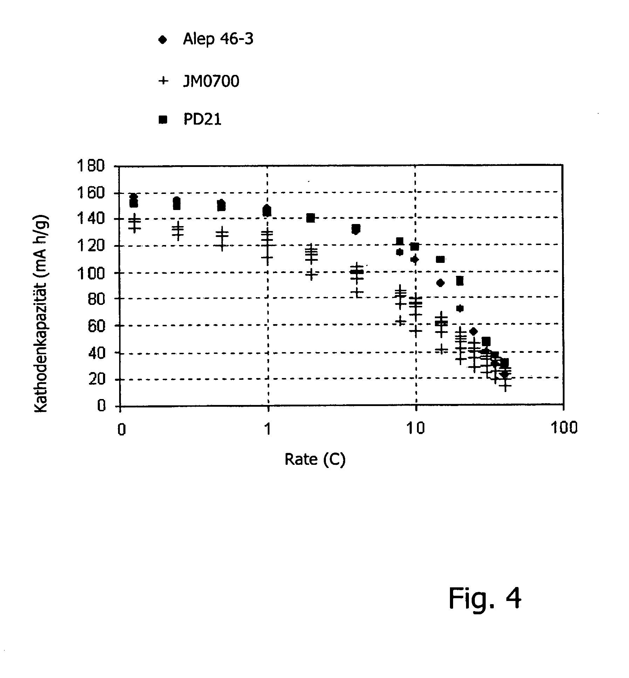

Fig. 4 zeigt die Belastbarkeit und Kapazität von LiFePO₄ hergestellt gemäß Beispiel 2, das ausgehend von verschiedenen Fe-PO₄·2H₂O Ausgangsmaterialien erhalten wurde.

Darin ist ersichtlich, dass sich die Teilchengröße der Partikel stark auf die Belastbarkeit und Kapazität der Proben auswirkt.

Die aus erfindungsgemäß einsetzbarem FePO₄·2H₂O hergestellte LiFePO₄ Probe (Alep 46_3) weist eine höhere Kapazität als die Probe aus Fig. 3 (JM0700) auf, das aus kommerziell erhältlichem FePO₄·2H₂O der Firma Budenheim erhalten wurde.

Hydrothermal gemäß der WO 2005/051840 A1 hergestelltes LiFePO₄ (erhältlich von der Firma Süd-Chemie AG) (PD21) ist vergleichbar. Die Probe Alep 46_3 zeigt erst ab 8C eine etwas schlechtere Kapazität PD 21.

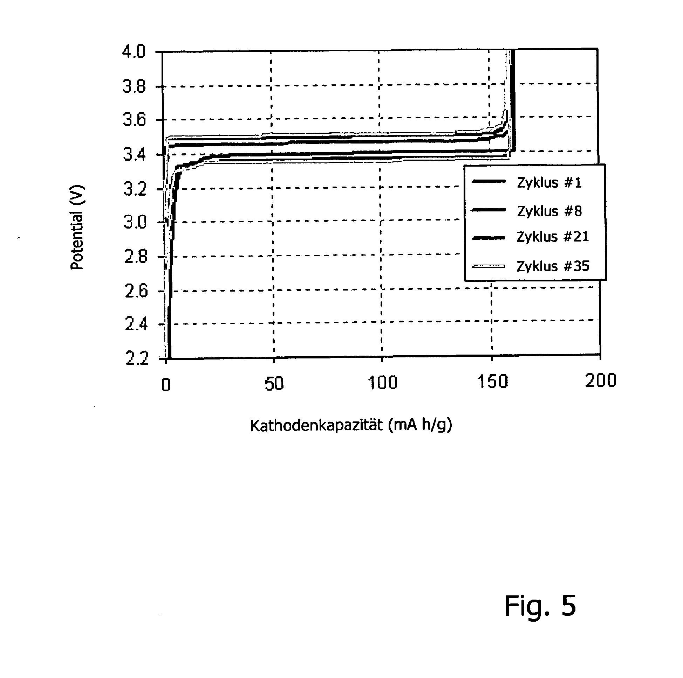

In Fig. 5 ist ebenfalls ersichtlich, dass LiFePO₄, das mittels dem erfindungsgemäßen Verfahren erhaltenen FePO₄·2H₂O gemäß Beispiel 2 hergestellt wurde, eine gute Zyklenbeständigkeit mit einem flachen Plateau bei ungefähr 3,5 Volt aufweist. Nach 35 Zyklen zeigt sich eine Abnahme der Kapazität um ca. 4 bis 3 %. Die Anfangskapazität der erhaltenen LiFePO₄ Probe lag bei 98% der Theorie.

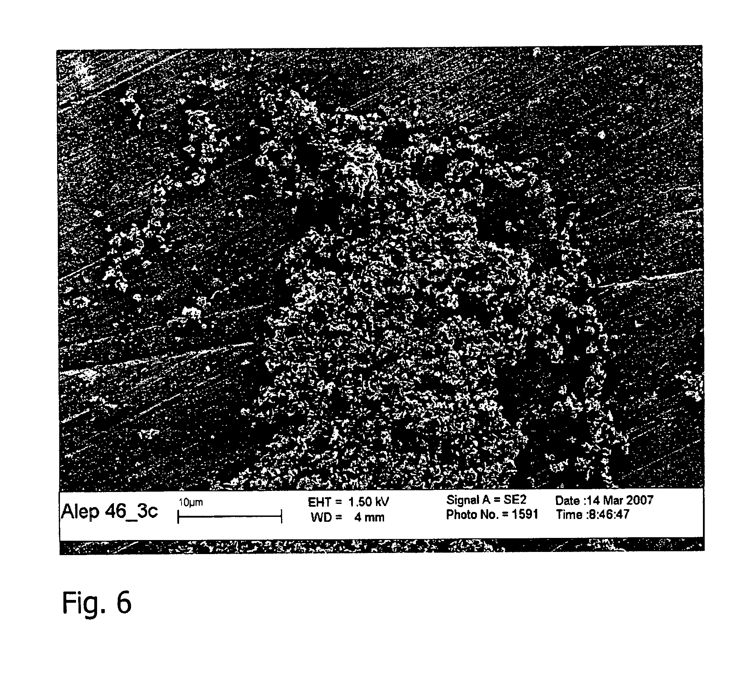

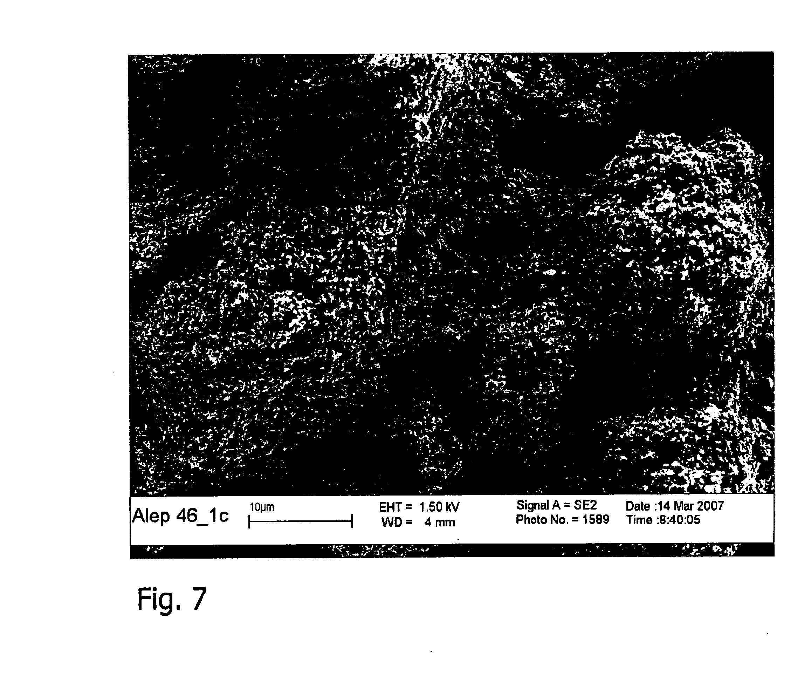

Fig. 7 zeigt eine SEM Aufnahme von FePO₄·2H₂O, das ebenfalls mittels Hydroxidfällung, jedoch ohne Zugabe eines oberflächenaktiven Mittels erhalten wurde. Im deutlichen Gegensatz zu der erfindungsgemäß einsetzbaren FePO₄·2H₂O Zusammensetzung gemäß Fig. 6 ist eine deutliche Agglomeration zu beobachten, wohingegen die erfindungsgemäße Zusammensetzung (0,05% oberflächenaktives Mittel) in Fig. 6 deutlich feinkristalline Partikel ohne Agglomeration zeigt.

### Beispiel 1

### Syn these von FePO₄·2H₂O

Das erfindungsgemäß einsetzbare Verfahren zur Herstellung einer erfindungsgemäß eingesetzten nanopartikulären Zusammensetzung wird anhand einer Synthese von FePO₄·2H₂O näher erläutert.

Das Verfahren wurde in einem hydrothermalen Reaktor (Thale Reaktor, 200 l) durchgeführt. Typischerweise erfolgte die Synthese folgendermaßen:
146 kg 40%iger FeCl₃ Lösung (58,9 kg FeCl₃, d.h. 360 mol) wurde in den Reaktor gegeben und weitere 125 l Wasser zugegeben. Anschließend wird die Mischung auf eine Temperatur von ca. 70°C erwärmt.

Anschließend wurden 56,2 kg 50%iger NaOH Lösung (28,1 kg NaOH, 702 mol) unter Rühren zugegeben, worauf die Temperatur auf ca. 95°C anstieg.

Anschließend wurden sofort 43,2 kg 80%iger H₃PO₄ (34,6 kg H₃PO₄, d.h. 353 mol) zugegeben. Die Temperatur verblieb dabei auf ca. 95°C. H₃PO₄ wurde in einer unterstöchiometrischen Menge von ca. 2% in Bezug auf FeCl₃ eingesetzt.

Anschließend wurde die Mischung auf ca. 100°C erhitzt und für 2 Stunden gerührt. Die Temperatur wurde dabei auf diesem Wert gehalten.

Bei dieser Reaktion betrug die Eisenkonzentration im System ungefähr 0,9 mol/l und der Neutralisationsgehalt betrug ungefähr 65 % (1,95 mol NaOH pro mol Fe).

Nach Beendigung des Rührens wurde die Lösung und die entstehende gelbe Suspension auf ca. 30°C abgekühlt, worauf als gelbe Suspension Eisenphosphat in einer stark sauren Lösung erhalten wurde.

Anschließend wurde zu der gekühlten Suspension eine 0,2%ige wässrige Lösung des schwach kationischen oberflächenaktiven Mittels Praestol 611 BC (Stockhausen GmbH & Co., Deutschland) wie folgt zugegeben:
Die Lösung des oberflächenaktiven Mittels (0,05 % oberflächenaktives Mittel bezogen auf die trockene Masse des Eisenphosphatdihydrats) wurde langsam zu der FePO₄·2H₂O Suspension über einige Minuten zugegeben. Anschließend wurde die leicht viskose Aufschlämmung abfiltriert und mit ionisiertem Wasser gewaschen bis die Leitfähigkeit des Waschwassers weniger als 400 µS/cm betrug.

Der d₅₀-Wert betrug 0,4 µm. Das Material war fein kristallin ohne Agglomerate aufzuweisen (Fig. 6).

### Beispiel 2

### Synthese von LiFePO₄ (pyrolytische Umsetzung)

LiFePO₄ wurde durch Reaktion des in Beispiel 1 erhaltenen FePO₄ ·2H₂O und Li₂CO₃ (erhältlich unter der Bezeichnung Lithiumcarbonat Special PC/US 250 ACU von der Fa. Pharma & Chemie GmbH) in Gegenwart von Wasserstoff hergestellt. In einem ersten Schritt wurden stöchiometrische Mengen der zwei Ausgangsverbindungen in Isopropanol gemörsert und anschließend in einem Ofen etappenweise (6°C/Minute bis zu einer Temperatur von 700 °C) unter einer Atmosphäre aus 8% Wasserstoff in Argon erhitzt. Diese Temperatur wurde während einer Stunde beibehalten. Anschließend wurde das erhaltene Produkt innerhalb von 40 Minuten auf Raumtemperatur abgekühlt.

Während der gesamten thermischen Behandlung und ebenso während der Absenkung der Temperatur wurde der Gasfluss des Reduktionsgases beibehalten. Die Gesamtdauer der thermischen Behandlung betrug ungefähr dreieinhalb Stunden.

Die Struktur des erhaltenen LiFePO₄ wurde mittels Pulverdiffraktometrie bestimmt und die erhaltenen peaks des Spektrums entsprachen dem von reinem Triphylit-LiFePO₄.

Der d₅₀-Wert betrug 0,5 µm. Das Material war fein kristallin ohne Agglomerate aufzuweisen (Fig. 1).

### Beispiel 3

### Synthese von LiFePO₄ mit Kohlenstoffbeschichtung

Das in Beispiel 2 erhaltene LiFePO₄ wurde mit einer Lösung aus Zelluloseacetat imprägniert (39,7 Gewichtsprozent Acetylgehalt mit einem mittleren Molekulargewicht MW von 50.000) in Aceton. Die Menge an Zelluloseacetat betrug ca. 5 Gewichtsprozent in Bezug auf die zu behandelnde LiFePO₄. Das Aceton wurde abgezogen und der erhaltene Feststoff in einem Heizofen unter Argonatmosphäre auf 700 °C mit einer Heizdauer von 6°C/Minute erhitzt. Anschließend wird diese Temperatur während einer Stunde beibehalten und anschließend das erhaltene Produkt nach und nach auf Raumtemperatur unter Schutzgas abgekühlt. Die erhaltene Probe enthielt 1 Gewichtsprozent Kohlenstoff.

Die elektrische Leitfähigkeit des erhaltenen Produkts betrug mehr als 1 x 10⁻⁸ S/cm.

Der d₅₀-Wert betrug 0,6 µm. Das Material war fein kristallin ohne Agglomerate aufzuweisen.

### Beispiel 4

### Synthese von LiFePO₄ mit Kohlenstoffbeschichtung

Mit Kohlenstoff beschichtetes LiFePO₄ wurde aus dem in Beispiel 1 erhaltenen FePO₄ ·2H₂O, Li₂CO₃ (erhätlich unter der Bezeichnung Lithiumcarbonat Special PC/US 250 ACU von der Fa. Pharma & Chemie GmbH) sowie einer Kohlenstoffquelle erhalten. Die Kohlenstoffquelle war wie in Beispiel 3 Zelluloseacetat (39,7 Gewichtsprozent Acetylgehalt, mittleres Molekulargewicht MW 50.000) wobei Zelluloseacetat in einer Menge von 5 Gewichtsprozent in Bezug auf die Menge an FePO₄ ·2H₂O eingesetzt wurde. Insgesamt betrug die Menge an Zelluloseacetat 4,2% in Bezug auf das Gewicht der Mischung aus FePO₄ ·2H₂O und Li₂CO₃. Die Mischung wurde in Isopropanol gerührt, das Lösungsmittel entfernt und die Mischung der in den Beispielen 2 und 3 vorgeschriebenen thermischen Behandlung unterzogen.

Die reduktive Atmosphäre bestand aus 8% Wasserstoff in Argon.

Die Struktur des erhaltenen Produkts wurde mittels Pulverdiffraktometrie bestimmt und die Reflexe entsprechen denen von reinem LiFePO₄.

Die hergestellte Probe besteht aus sehr feinen voneinander isolierten Partikeln in der Größenordnung von 1 µm die mit einer dünnen Kohlenstoffschicht bedeckt sind.

Die elektronische Leitfähigkeit des erhaltenen Produkts war höher als 1 x 10⁻⁸ S/cm.

Der d₅₀-Wert betrug 0,6 µm. Das Material war fein kristallin ohne Agglomerate aufzuweisen.

### Beispiel 5

### Synthese von kohlenstoffbeschichteten LiFePO₄.

Das aus Beispiel 1 erhaltene FePO₄ ·2H₂O wurde in stöchiometrischen Mengen mit Li₂CO₃ (erhältlich unter der Bezeichnung Lithiumcarbonat Special PC/US 250 ACU von der Fa. Pharma & Chemie GmbH) sowie 5 Gewichtsgewichtsprozent bezogen auf die gesamte Mischung aus FePO₄ ·2H₂O, Li₂CO₃ und einer polymeren Kohlenstoffquelle Polyethylen-block-poly(ethylenglykol) (50% Polyethylen) (Firma Aldrich) vermischt. Diese Mischung wurde in Isopropanol gerührt und anschließend nach Trocknen in den Ofen gegeben und der in Beispiel 2 und 3 beschriebenen thermischen Behandlung unterzogen.

Die elektronische Leitfähigkeit des erhaltenen Produkts war hoher als 1 x 10⁻⁸ S/cm.

Der d₅₀-Wert betrug 0,5 µm. Das Material war fein kristallin ohne Agglomerate aufzuweisen.

### Beispiel 6

### Elektrochemische Messungen

An der erfindungsgemäß erhaltenen LiFePO₄ Verbindung aus Beispiel 5 wurden elektrochemische Messungen durchgeführt.

Die Messung der Kapazität im ersten Zyklus wies Werte von 95 bis 97,5 % der theoretischen Kapazität auf.

Das erfindungsgemäß erhaltene LiFePO₄ weist eine sehr gute Zyklenbeständigkeit mit einem flachen Plateau bei -3,5 V auf (Fig. 5).

Nach 35 Zyklen konnte eine Abnahme der Kapazität um nur ca. 2% gemessen werden.

### Referenzbeispiel 1

### Synthese von LiFePO₄ (Hydrothermale Umsetzung)

### 1. Herstellung der Vorläufersuspension

In einem Behälter wurden 8,746 kg LiOH · H₂O in ca. 50 1 deionisiertem Wasser gelöst und die Lösung über eine Monopumpe in einen 200-l-Autoklaven mit Rührer vorgelegt und bei 40 bis 80 UPM gerührt.

Anschließend wurden in einem Vorbehälter 18,61 kg FeSO₄ · 7H₂O in 30 bis 35 l deionisiertem Wasser gelöst und langsam unter Rühren 7,8 kg 85-prozentige Phosphorsäure zugegeben. Die saure Lösung wurde über die Monopumpe in den Autoklaven gepumpt. Sofort begann im Autoklaven ein Gemisch von Fe₃(PO₄)₂·8H₂O und Li₃PO₄ auszufallen.

Anschließend wurde die entstehende Suspension auf ca. 30 °C abgekühlt und zu der Suspension eine 0,2-prozentige wässrige Lösung des schwach kationischen oberflächenaktiven Mittels Praestol 611 BC (Stockhausen GmbH & Co., Deutschland) zugegeben. Die Zugabe erfolgte tropfenweise über einige Minuten, bevorzugt ca. 5 bis 10 Minuten.

Im Gegensatz zur Synthese ohne Zugabe des oberflächenaktiven Mittels entsteht eine feinkristalline Suspension anstelle der bislang beobachteten puddingartigen Konsistenz der Susupension, wie sie z.B in der WO 2005/051840 A1 beschrieben wurde. Die in der vorliegend beschriebenen internationalen Patentanmeldung erforderliche Dispergier- oder Mahlbehandlung sowie das Umpumpen des hochviskosen Feststoffbreis entfällt im vorliegenden erfindungsgemäßen Verfahren.

Nach erfolgter Fällung wurde die Fe₃(PO₄)₂·8H₂0/Li₃PO₄-Suspension noch ca. 2 Stunden umgepumpt. Damit wird eine ideale Mischung der gefällten Vorläufersubstanzen Fe₃(PO₄)₂·8H₂O und Li₃PO₄ erreicht.

Typischerweise kann dabei eine sogenannte Kreiselpumpe eingesetzt werden.

Nach dem innigen Vermischen der beiden Vorläufersubstanzen mittels Umpumpen wurde der Autoklav druckfest verschlossen und unter ständigem Rühren bei 90 bis 100 UPM während ca. 2 Stunden auf 160 °C aufgeheizt und für 10 Stunden bei dieser Temperatur gehalten. Anschließend wurde innerhalb von 3 bis 4 Stunden auf Raumtemperatur abgekühlt und die erhaltene feinkristalline LiFePO₄-Suspension abfiltriert und mit ionisiertem Wasser gewaschen bis die Leitfähigkeit des Waschwassers weniger als 4 µS/cm betrug.

Der d₅₀-Wert betrug 0,5 µm. Das Material war fein kristallin ohne Agglomerate aufzuweisen.

### Referenzbeispiel 2

### Synthese von kohlenstoffbeschichtetem LiFePO₄

Das in Beispiel 10 erhaltene LiFePO₄ wurde wie in Beispiel 3 mit Kohlenstoff beschichtet. Anstelle von Zelluloseacetat wurde eine entsprechende Menge Lactose-Monohydrat als Kohlenstoffquelle verwendet.

Typischerweise wurde zur Erzielung einer ca. 2-prozentigen Kohlenstoffbeschichtung auf dem fertigen feinkristallinen Produkt pro Kilogramm trockenem LiFePO₄-Pulver ca. 90 g Lactose-Monohydrat in 350 g deionisiertem Wasser verwendet.

Die elektrische Leitfähigkeit des erhaltenen Produkts betrug mehr als 1 x 10⁻⁸ cm. Die so erhaltene Probe enthielt ca. 2,2 Gewichtsprozent Kohlenstoff.

Der d₅₀-Wert betrug 0,6 µm. Das Material war fein kristallin ohne Agglomerate aufzuweisen.

## Patentansprüche

1. Verfahren zur Herstellung von nanopartikulärem Lithiumeisenphosphat oder gemischtem Lithiumeisenübergangsmetallphosphat bei dem
A) eine nach den unten stehenden Schritten (a) bis (d) erhältliche nanopartikuläre Zusammensetzung enthaltend nicht-agglomerierte kristalline Nanopartikel aus FePO₄·2H₂O mit einer Partikelgrößenverteilung d₉₀ ≤ 10 µm mit
B) einer stöchiometrischen Menge einer Lithiumverbindung ausgewählt aus LiOH, Li₂O, Lithiumacetat, Lithiumoxalat oder Li₂CO₃ pyrolytisch umgesetzt wird,
wobei die Schritte (a) bis (d) folgendermaßen sind:
a) Bereitstellen einer sauren wässrigen Lösung einer Fe-Ausgangsverbindung, wobei die Konzentration (in Vol.-%) der sauren Lösung der Fe-Ausgangsverbindung 10 bis 50 % beträgt;
b₂) Zugeben einer Säure mit einem Anion, das geeignet ist mit der Fe-Ausgangsverbindung einen löslichen Niederschlag zu bilden;
c) Zugeben eines oberflächenaktiven Mittels, das einen kationischen Charakter aufweist, nach Beginn der Fällung des Niederschlags; und
d) Filtrieren des Niederschlags.

2. Verfahren nach Anspruch 1, **dadurch gekennzeichnet, dass** weiter eine Übergangsmetallverbindung zugegeben wird, wobei das Übergangsmetall ausgewählt wird aus Co, Ti, Ni, V, W, Pd, Ru, Cu, Mn, Ba, Sr, Nd, Mg.

3. Verfahren nach Anspruch 1 oder 2, **dadurch gekennzeichnet, dass** weiter eine Kohlenstoffquelle mit umgesetzt wird.

4. Verfahren nach einem der Ansprüche 1 bis 3, weiter umfassend vor Schritt b₂ den zusätzlichen Schritt des
b₁) Zutropfens einer Alkalimetallhydroxid-Lösung über einen Zeitraum von 2 bis 10 Minuten, wobei 40 bis 90 % der für den Gesamtumsatz der Fe-Ausgangsverbindung benötigten Menge an Alkalimetallhydroxid verwendet wird.

5. Verfahren nach Anspruch 4, **dadurch gekennzeichnet, dass** das Alkalimetallhydroxid in einer Konzentration von ca. 2 mol pro mol Fe verwendet wird.

6. Verfahren nach einem der Ansprüche 1 bis 5, **dadurch gekennzeichnet, dass** die Lösung der Fe-Ausgangsverbindung auf eine Temperatur von 60 bis 170°C erhitzt wird.

7. Verfahren nach einem der Ansprüche 1 bis 6, **dadurch gekennzeichnet, dass** die Säure in einer Konzentration von 0,5 bis 3 mol pro Mol Fe verwendet wird.

8. Verfahren nach einem der Ansprüche 1 bis 7, **dadurch gekennzeichnet, dass** das kationische oberflächenaktive Mittel in einer Menge von 0,01 bis 2 Gew.-% bezogen auf die theoretische Ausbeute des Nanopartikelmaterials eingesetzt wird.

9. Verfahren nach einem der vorhergehenden Ansprüche 1 bis 8, **dadurch gekennzeichnet, dass** alle Verfahrensschritte a) bis c) bei einer Temperatur von 60 bis 170°C durchgeführt werden.

10. Verfahren nach einem der vorhergehenden Ansprüche 1 bis 9, **dadurch gekennzeichnet, dass** das ausgefällte Produkt bei einer Temperatur von 500-1200°C kalziniert wird.

11. Verfahren nach einem der Ansprüche 1 bis 10, **dadurch gekennzeichnet, dass** als saure wassrige Lösung der FeAusgangsverbindung eine saure FeCl₃ Lösung verwendet wird.

## Claims

1. Method for the production of nanoparticulate lithium iron phosphate or mixed lithium iron transition metal phosphate in which
A) a nanoparticulate composition obtainable using steps (a) to (d) below containing non-agglomerated crystalline nanoparticles of FePO₄·2H₂O with a particle-size distribution d₉₀ ≤ 10 µm is
B) reacted pyrolytically with a stoichiometric quantity of a lithium compound selected from LiOH, Li₂O, lithium acetate, lithium oxalate or Li₂CO₃,
wherein steps (a) to (d) are as follows:
a) providing an acidic aqueous solution of an Fe starting compound, wherein the concentration (in vol.-%) of the acidic solution of the Fe starting compound is 10 to 50%;
b₂) adding an acid with an anion which is suitable for forming a soluble precipitate with the Fe starting compound;
c) adding a surface-active agent which has a cationic character after the start of the precipitation of the precipitate; and
d) filtering the precipitate.

2. Method according to claim 1, **characterized in that** additionally a transition metal compound is added, wherein the transition metal is selected from Co, Ti, Ni, V, W, Pd, Ru, Cu, Mn, Ba, Sr, Nd, Mg.

3. Method according to claim 1 or 2, **characterized in that** additionally a carbon source is co-reacted.

4. Method according to one of claims 1 to 3, further comprising before step b₂ the additional step of
b₁) adding an alkali metal hydroxide solution dropwise over a period of from 2 to 10 minutes, wherein 40 to 90% of the quantity of alkali metal hydroxide required for complete reaction of the Fe starting compound is used.

5. Method according to claim 4, **characterized in that** the alkali metal hydroxide is used in a concentration of approx. 2 mol per mol Fe.

6. Method according to one of claims 1 to 5, **characterized in that** the solution of the Fe starting compound is heated to a temperature of from 60 to 170°C.

7. Method according to one of claims 1 to 6, **characterized in that** the acid is used in a concentration of from 0.5 to 3 mol per mol Fe.

8. Method according to one of claims 1 to 7, **characterized in that** the cationic surface-active agent is used in a quantity of from 0.01 to 2 wt.-% relative to the theoretical yield of the nanoparticle material.

9. Method according to one of the previous claims 1 to 8, **characterized in that** all process steps a) to c) are carried out at a temperature of from 60 to 170°C.

10. Method according to one of the previous claims 1 to 9, **characterized in that** the precipitated product is calcined at a temperature of from 500-1200°C.

11. Method according to one of claims 1 to 10, **characterized in that** an acidic FeCl₃ solution is used as acidic aqueous solution of the Fe starting compound.

## Revendications

1. Procédé de fabrication de lithium-fer-phosphate nanoparticulaire ou de lithium-fer-métal de transition-phosphate mélangé, lors duquel
A) une composition nanoparticulaire pouvant être obtenue selon les étapes (a) à (d) ci-dessous contenant des nanoparticules cristallines non agglomérées de FePO₄.2H₂O avec une distribution de taille particulaire d₉₀ ≤ 10 µm est
B) convertie par voie pyrolytique avec une quantité stoechiométrique d'un composé de lithium sélectionné parmi LiOH, Li₂O, l'acétate de lithium, l'oxalate de lithium ou Li₂CO₃,
dans lequel les étapes (a) à (d) sont comme suit :
a) préparation d'une solution aqueuse acide d'un composé de départ de Fe, dans lequel la concentration (en % en vol.) de la solution acide du composé de départ de Fe va de 10 à 50 % ;
b₂) addition d'un acide avec un anion qui convient à former avec le composé de départ de Fe un précipité soluble ;
c) addition d'un agent tensioactif qui présente un caractère cationique après le début de la précipitation du précipité ; et
d) filtration du précipité.

2. Procédé selon la revendication 1, **caractérisé en ce qu'**un composé métallique de transition est en outre ajouté, dans lequel le métal de transition est sélectionné parmi Co, Ti, Ni, V, W, Pd, Ru, Cu, Mn, Ba, Sr, Nd, Mg.

3. Procédé selon la revendication 1 ou 2, **caractérisé en ce qu'**une source de carbone fait en outre partie de la conversion.

4. Procédé selon l'une quelconque des revendications 1 à 3, comprenant en outre avant l'étape b₂ l'étape supplémentaire de
b₁) addition goutte à goutte d'une solution d'hydroxyde de métal alcalin sur une période de 2 à 10 minutes, dans lequel 40 à 90 % de la quantité d'hydroxyde de métal alcalin nécessaire pour la conversion totale du composé de départ de Fe sont utilisés.

5. Procédé selon la revendication 4, **caractérisé en ce que** l'hydroxyde de métal alcalin est utilisé à une concentration d'environ 2 moles par mole de Fe.

6. Procédé selon l'une quelconque des revendications 1 à 5, **caractérisé en ce que** la solution du composé de départ de Fe est chauffée à une température de 60 à 170°C.

7. Procédé selon l'une quelconque des revendications 1 à 6, **caractérisé en ce que** l'acide est utilisé à une concentration de 0,5 à 3 moles par mole de Fe.

8. Procédé selon l'une quelconque des revendications 1 à 7, **caractérisé en ce que** l'agent tensioactif cationique est utilisé en une quantité de 0,01 à 2 % en poids par rapport au rendement théorique du matériau nanoparticulaire.

9. Procédé selon l'une quelconque des revendications précédentes 1 à 8, **caractérisé en ce que** l'ensemble des étapes de procédé a) à c) sont effectuées à une température de 60 à 170°C.

10. Procédé selon l'une quelconque des revendications précédentes 1 à 9, **caractérisé en ce que** le produit précipité est calciné à une température de 500 à 1200°C.

11. Procédé selon l'une quelconque des revendications 1 à 10, **caractérisé en ce qu'**une solution acide de FeCl₃ est utilisée comme solution aqueuse acide du composé de départ de Fe.
